## Europäisches Patentamt
## European Patent Office
## Office européen des brevets

(19)

(11) Numéro de publication: **0 277 454 B1**

(12) **FASCICULE DE BREVET EUROPEEN**

(45) Date de publication du fascicule du brevet:
31.10.90

(51) Int. Cl.⁵: **A23G 3/00, A23G 1/00**

(21) Numéro de dépôt: **87460021.6**

(22) Date de dépôt: **14.12.87**

(54) **Pâte à bouchée pour fourrage de produits alimentaires, procédé pour sa fabrication, et produit fabriqué à partir de cette pâte.**

(30) Priorité: **18.12.86 FR 8617923**

(43) Date de publication de la demande:
**10.08.88 Bulletin 88/32**

(45) Mention de la délivrance du brevet:
**31.10.90 Bulletin 90/44**

(84) Etats contractants désignés:
**BE CH DE GB LI NL**

(56) Documents cités:
**Néant**

(73) Titulaire: **Breton, François, Route de Kervigorn Saint-Pabu, F-29262 Ploudalmezeau(FR)**

(72) Inventeur: **Breton, François, Route de Kervigorn Saint-Pabu, F-29262 Ploudalmezeau(FR)**

(74) Mandataire: **Dubreuil, Annie, Cabinet DUBREUIL Le Suffren 23 rue des Peupliers, F-56100 Lorient(FR)**

ACTORUM AG

## Description

L'invention concerne une nouvelle pâte à bouchée pour le fourrage de produits alimentaires (chocolat, pâtisserie, confiserie...). Elle concerne également un procédé pour sa préparation ainsi que tout produit obtenu à partir de cette pâte.

Actuellement, il existe de nombreuses recettes pour la préparation de pâtes à bouchée; elles sont en général à base de praliné et d'ingrédients divers tels que le chocolat au lait, le beurre de cacao, les noisettes, etc. Ces pâtes sont utilisées pour le fourrage, notamment, de chocolat et de confiserie.

Cependant, les goûts du consommateur évoluent au cours du temps et les impératifs commerciaux font que les fabricants sont toujours à la recherche de nouveaux produits susceptibles d'intéresser le marché.

La présente invention a pour objet un nouveau produit, à base de praliné, ayant des caractéristiques sensorielles très appréciées, produit qui peut être utilisé comme fourrage de différents produits alimentaires.

Elle concerne plus précisément une pâte à bouchée caractérisée en ce qu'elle est constituée par la combinaison de praliné, de crêpes dentelles et de chocolat blanc.

L'invention sera mieux comprise à l'aide des explications qui vont suivre.

La présente invention concerne une nouvelle combinaison dont la caractéristique est d'associer le praliné, le chocolat blanc et les crêpes dentelles, et dont le mode de préparation permet d'obtenir une texture' fondante et une saveur originale agréable.

Le praliné est une pâte fine, onctueuse et très aromatique obtenue par broyage d'un mélange constitué d'amandes, de noisettes grillées et de sucre caramélisé. On connaît également le goût et la texture des crêpes dentelles. Le chocolat blanc est un produit exempt de matières colorantes qui est obtenu à partir de beurre de cacao, saccharose et graisse butyrique.

Ces trois composants doivent être utilisés dans des proportions convenables pour obtenir la qualité recherchée. Les meilleurs résultats sont obtenus lorsque les proportions sont:
- 30 à 35 % de praliné;
- 50 à 60 % de crêpe dentelle;
- 5 à 10 % de chocolat blanc.

Par exemple, pour 1 kilogramme de praliné, on adjoindra 2 kilogrammes de crêpes dentelles et 0,25 kilogramme de chocolat blanc. D'autre ingrédients peuvent également être ajoutés, tels que des parfums, alcools, etc.

Un procédé de préparation d'une pâte conforme à l'invention comporte les étapes suivantes:
- faire fondre le chocolat blanc au bain marie à une température comprise entre 30 et 34° C;
- transposer dans un récipient ou un batteur mélangeur;
- ajouter rapidement le praliné surfin;
- mélanger manuellement ou à l'aide d'un batteur adapté pendant 2 à 3 minutes;
- ajouter les brisures de crêpes dentelles;
- mélanger 4 à 5 minutes.

La pâte est alors prête à être utilisée pour le fourrage de divers produits alimentaires.

L'invention concerne également tout produit obtenu à partir d'une pâte selon l'invention. Une application de cette pâte est maintenant décrite.

On utilise une couverture de chocolat moulé à la température de 29° C, dans des alvéoles. Ces dernières peuvent revêtir de manière classique toute sorte de profil.

On introduit la quantité désirée de pâte à bouchée conforme à l'invention; à l'intérieur de ces alvéoles, on recouvre la partie supérieure de chocolat. On refroidit rapidement, par exemple dans un réfrigérateur ventilé à une température suffisamment basse (par exemple 5° C) pour solidifier le tout. Ensuite, on effectue le démoulage et l'on obtient une bouchée d'une saveur et d'une onctuosité exceptionnelle.

Il s'agit là d'un nouveau produit chocolatier de confiserie prêt à la commercialisation dans le conditionnement adéquat.

## Revendications

1) Pâte à bouchée caractérisée en ce qu'elle est constituée par la combinaison de praliné, de crêpes dentelles et de chocolat blanc.

2) Pâte à bouchée selon la revendication 1, caractérisée en ce que les proportions des trois composants sont les suivantes:
- 30 à 35 % de praliné,
- 50 à 60 % de crêpe dentelle,
- 5 à 10 % de chocolat blanc.

3) Procédé de préparation d'une pâte à bouchée selon l'une des revendications 1 et 2, caractérisée en ce qu'il consiste à:
- faire fondre le chocolat blanc au bain marie à une température comprise entre 30 et 34° C;
- transposer dans un récipient ou un batteur mélangeur;
- ajouter rapidement le praliné surfin;
- mélanger manuellement ou à l'aide d'un batteur adapté pendant 2 à 3 minutes;
- ajouter les brisures de crêpes dentelles;
- mélanger 4 à 5 minutes.

4) Produit fabriqué à partir d'une pâte à bouchée selon l'une des revendications 1 et 2, caractérisé en ce qu'il comporte une couverture de chocolat moulée dans des alvéoles à la température de moulage du chocolat, alvéoles dans lesquelles est introduite la dite pâte, le tout étant alors recouvert de chocolat avant d'être rapidement refroidi dans un réfrigérateur ventilé à une température suffisamment basse pour solidifier le tout.

## Patentansprüche

1. Füllmasse, dadurch gekennzeichnet, daß sie aus der Kombination aus Pralinenmasse, aus extradünnen Pfannkuchen und aus weißer Schokolade besteht.

2. Füllmasse nach Anspruch 1, dadurch gekennzeichnet, daß die Proportionen der drei Bestandteile die folgenden sind:
– 30 bis 35% Pralinenmasse,
– 50 bis 60% extradünne Pfannkuchen,

– 5 bis 10% weiße Schokolade.

3. Verfahren zur Zubereitung einer Füllmasse nach Anspruch 1 oder 2, dadurch gekennzeichnet, daß es darin besteht:

– die weiße Schokolade bei einer zwischen 30 und 34° betragenden Temperatur in einem Warmbad schmelzen zu lassen;

– sie in einen Behälter oder in ein Rührgerät umzufüllen;

– die extrafeine Pralinenmasse schnell hinzuzufügen;

– entweder manuell oder mittels eines geeigneten Rührgerätes während 2 bis 3 Minuten vermischen;

– die Bruchstücke der extradünnen Pfannkuchen hinzuzufügen;

– 4 bis 5 Minuten vermischen.

4. Produkt, das ausgehend von einer Füllmasse nach Anspruch 1 oder 2 hergestellt wird, dadurch gekennzeichnet, daß es eine Kuvertüre aus Schokolade aufweist, welche bei der Schmelztemperatur der Schokolade in Formen gegossen wird, wobei die genannte Füllmasse in diese Formen eingeführt wird und das Ganze dann mit Schokolade überzogen wird, bevor es in einem belüfteten Kühlschrank bei einer Temperatur, die niedrig genug ist, um das Ganze zu verfestigen, schnell abgekühlt wird.

## Claims

1. Confectionery paste characterised in that it is constituted by the combination of praline, thin pancakes and white chocolate.

2. Confectionery paste according to claim 1, characterised in that the proportions of the three components are the following:

30-35% of praline
50-60% of thin pancake
5-10% of white chocolate

3. Method of preparing a confectionery paste according to one of claims 1 and 2, characterised in that it consists in: melting the white chocolate in a double boiler at a temperature between 30 and 34°C; transferring into a container or a beater-mixer; rapidly adding the superfine praline; mixing manually or with the aid of a suitable beater for two to three minutes; adding the fragments of thin pancakes; mixing for four to five minutes.

4. A product made from a confectionery paste according to one of claims 1 and 2, characterised in that it comprises a covering chocolate moulded into cells at the melting temperature of the chocolate, into which cells the said paste is introduced, the whole then being covered with chocolate before being rapidly cooled in a ventilated refrigerator to a temperature sufficiently low to solidify the whole.